# EUROPEAN PATENT SPECIFICATION

(11) **EP 3 729 584 B1**
(45) Date of publication and mention of the grant of the patent: **21.10.2026**
(21) Application number: 19706892.7
(22) Date of filing: 06.02.2019
(51) Int. Cl.: H02H 7/28, H02H 7/30, H02H 3/027, H02H 3/033

(54) **A NANO GRID PROTECTION DEVICE, LARGE POWER GRID AND A METHOD FOR CONTROLLING A NANO GRID PROTECTION DEVICE**
NANONETZSCHUTZVORRICHTUNG, GROSSSTROMNETZ UND VERFAHREN ZUR STEUERUNG EINER NANONETZSCHUTZVORRICHTUNG
DISPOSITIF DE PROTECTION DE NANOGRILLE, GRAND RÉSEAU ÉLECTRIQUE ET PROCÉDÉ DE COMMANDE D'UN DISPOSITIF DE PROTECTION DE NANOGRILLE

(30) Priority: 06.02.2018 CN 201810119603
(43) Date of publication of application: 28.10.2020
(73) Proprietor: Siemens Aktiengesellschaft, 80333 München (DE)
(72) Inventor: DU, Feng, Shanghai, 200127 (CN); ZHU, Yi, 92245 Kümmersbruck (DE); CHEN, Wei Gang, Shanghai, 200135 (CN); LIU, Zhen, Shanghai, 200333 (CN); ZHUO, Yue, Beijing, 100084 (CN)
(74) Representative: Isarpatent
(86) International application number: PCT/EP2019/052909
(87) International publication number: WO 2019/154856

(56) References cited:
- CN-A- 101 702 506
- CN-A- 105 870 893
- CN-A- 106 451 382
- CN-U- 205 248 782
- US-A1- 2011 282 507

## Description

### Technical Field

The present invention relates to a power grid with distributed energy sources and an autonomous protection device connecting the main power grid and a nano grid in the power grid.

### Background Art

A micro-grid may comprise a plurality of nano grids, each of which is a small distribution system composed of distributed generators, energy storage devices, energy conversion devices, related loads, monitoring and protection devices assembling to create a small power distribution system, in which the nano grid generally refers to the power grid with a power level of 100 kW or lower. A nano grid usually operates in grid-connected mode or in disconnection with the main grids island made when connected to conventional main grids or commercial grids (e.g. 20KV/400V commercial grids) or disconnected from the main grids. The nano grid usually consists of multiple parallel branches, each of which is equipped with protective devices, usually including miniature circuit breakers (MCBs). When a nano grid works in the grid-connected mode, its internal protection devices can usually meet the demand.

US 2011/282507 A1 describes a protection system for microgrids, which manages fault ride-through behavior and provides protection coordination between the microgrid and the main grid. The document addresses maintaining grid stability during faults and transitions between grid-connected and islanded modes.

CN 205248782 U discloses a protection device designed for islanded grid systems, providing fault detection and disconnection functionality based on predefined protection criteria. The document describes switching mechanisms for isolating faulty sections.

CN 106451382 A relates to a protection device that monitors current and voltage in a distribution network and initiates a protective action when preset thresholds are exceeded. The document describes a master-slave architecture for protection coordination but does not disclose differentiated handling based on current direction combined with voltage behavior and time persistence.

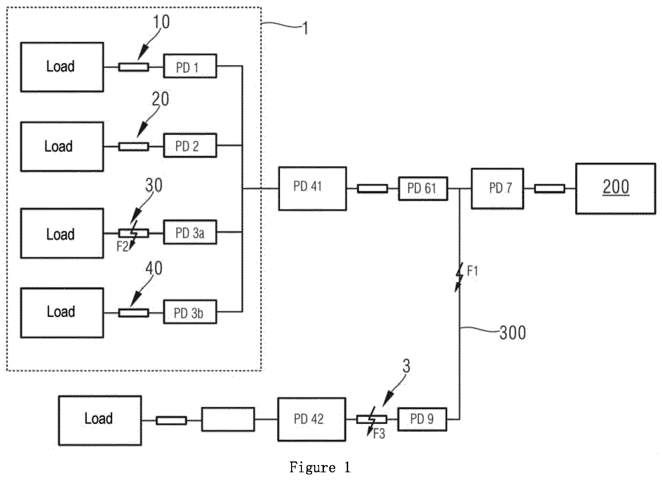

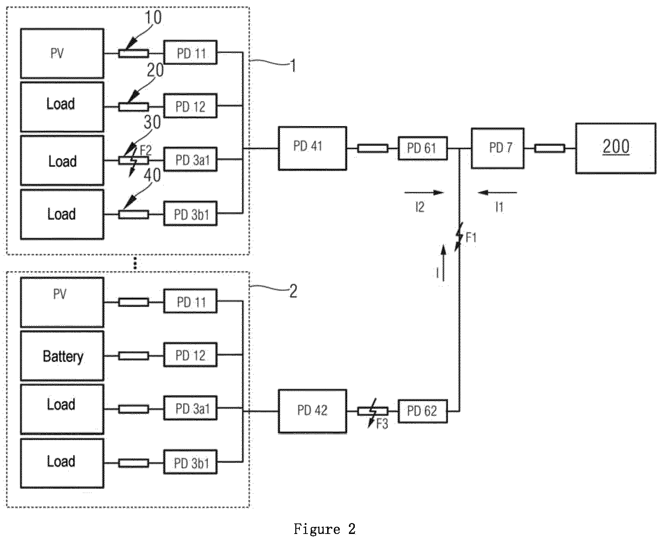

Figure 1 shows a schematic diagram of a typical nano grid connecting to the main power grid without a distributed power supply. The nano grid 1 shown in Figure 1 comprises n parallel branches (not fully shown in the figure). Each branch is equipped with a load and a miniature circuit breaker (MCB) as a protection device. Of course, in some cases, the protection devices can also be installed only on some branches. When the nano grid 1 operates through a nano grid protection device with the main power grid in grid-connected mode, for example, when F2 of branch 30 fails, the protection device 33 of branch 30 should be tripped first. When F3 of the circuit 300, which connects the nano grid 1 to the main power grid 200 in parallel, fails, the protective device PD9 on the circuit should be tripped first. When F1 of the circuit 300 fails, the main power grid protection device PD7 should be tripped first. Under the nano grid without the distributed power supply, the current through the nano grid protection device PD4 all flows from the main power grid 200 to the nano grid 1, because the protection devices at all locations can be tripped normally as required and these requirements can be met. Protective devices can be miniature circuit breakers and the miniature circuit breakers that can be reset by remote control, etc. Figure 2 shows the presence of a distributed power supply in a nano grid. As shown in Figure 2, the grid comprises at least one of the first nano grid 1 and the circuit 3 or exists in the form of a second nano grid 2 in the embodiment, in which, Distributed Resources (DRs), for example, photovoltaic (PV) or energy storage devices, such as batteries, are installed in the nano grid 1 and the nano grid 2. The first nano grid 1 and the second nano grid 2 are connected to a commercial grid 200 or the main power grid 200 respectively, in which the first nano grid 1 is connected in series with the first nano grid protection device PD41 to form the first nano grid branch, and the second nano grid 2 is connected in series with a second nano grid protection device PD42 to form the first nano grid branch. The first unit branch is connected in parallel to the second unit branch, followed by connecting the main power grid protection device PD7 in series with the main power grid 200. In a large grid with a nano grid comprising distributed generators, a current flowing through each nano grid a protection device may flow from a nano grid to the main power grid 200 or from the main power grid 200 to a nano grid. When F1 fails, the main power grid protection device PD7 and each nano grid protection device PD4 should be tripped first. However, for example, in the case of nano grid 1, 2 and circuit 3 supplying the power to the main power grid 200, the current level at F1 includes the current contribution of distributed power supply in the nano grid, so the current level measured by the main power grid protection device PD7 is not enough to trigger the protection by the main power grid protection device PD7, resulting in the so-called "blind zone protection" by the main power grid protection device PD7. This is particularly serious in the case of unit circuits with multiple distributed power supply. This problem has not been solved in the prior art.

### Summary of the Invention

The present invention provides a nano grid protection device and a method for controlling a nano grid protection device with the features of the independent claims 1 and 6, respectively. Further advantageous embodiments are subject matter of the dependent claims.

One aspect provides a nano grid protection device with a distributed power supply, wherein the nano grid is connected with a bus through the nano grid protection device, and wherein a main power grid is connected to the bus through a main power grid protection device so as to form a large grid. The nano grid protection device comprises:
a signal unit, configured to detect and send current information passing through the nano grid protection device, the current information comprising the magnitude and direction of the current;
a control unit, configured to determine, on the basis of the received current information, whether to send a trip signal; and
an execution mechanism, configured to execute a trip operation of the nano grid protection device when receiving the trip signal. In the case of the nano grid with distributed power supply, the traditional nano grid protection device cannot provide the protection and cannot solve the blind zone protection problem of the main grid, either. According to the present invention, in addition to the normal trip, the nano grid protection device can intelligently trip or close based on the level direction of the current in the additional site, so as to better protect the nano grid with distributed power supply and solve the problem of blind area protection.

The signal unit detects the voltage information, which includes the level of voltage. In this way, it can make a judgment more accurately and avoid blind area protection. When a current flows from the main grid to the nano grid, the signal unit determines that the current is a forward current, and when a current flows from the nano grid to the main grid, the signal unit determines that the current is a reverse current.

According to a preferred embodiment, the control unit sends a trip signal after it has waited for a trip time period, in which the trip time period is that of the internal protection device within the unit intranet. In other words, the nano grid control device works as a standby protection device for the internal protection device in the internal nano grid.

According to a preferred embodiment, the control unit sends a trip signal when the reverse current continually exceeds the reverse current threshold in a delayed time period. Through this operation, when the nano grid protection device fails at F1 or F3 and the protection device at F3 does not operate, it can protect the nano grid effectively, that is, it can solve the problem of blind zone protection.

According to a preferred embodiment, when the level of the received voltage decreases, the control unit, when determining that the level of the voltage has dropped on the basis of the received information, confirms that the reverse current is a reverse fault current. By determining the voltage drop, the current change by the fault is confirmed.

According to a preferred embodiment, when the voltage is determined to be zero, the control unit described sends a trip signal, especially when the system voltage is lost, it is also tripped to protect the main power grid.

According to a preferred embodiment, when the level of the received voltage decreases, the control unit, when determining that the level of the voltage has dropped on the basis of the received information, confirms that the reverse current is a reverse fault current. By determining the voltage drop, the current change by the fault is confirmed.

According to a preferred embodiment, a branch circuit is connected to the bus in parallel with the nano grid through at least one branch protection device, in which the delayed time period is the trip time of the branch protection device. Another aspect provides a large power grid, which comprises:
at least one nano grid with a distributed power supply, each of the nano grids being connected to a bus through at least one nano grid protection device;
a branch circuit, connected to the bus through at least one branch protection device; and
a main grid, connected to the bus through a main grid protection device, wherein at least one of the nano grid protection devices is a nano grid protection device according to any of the above embodiments.

According to a preferred embodiment, the branch circuit is a nano grid with distributed power supply, and the branch protection device is a nano grid protection device according to any of the above embodiments.

Yet another aspect provides a method for controlling the nano grid protection device with nano grid distributed power supply, wherein the nano grid is connected to a bus by the nano grid protection device, a branch circuit is connected to the bus through at least one branch protection device in parallel with the nano grid, and wherein a main grid is connected with the bus through a main grid protection device. The method comprises:
a receiving step: receiving current information and voltage information passing through the nano grid protection device, the current information comprising the magnitude and direction of the current, and the voltage information at least comprising the magnitude of a voltage; and
a determining step: determining, on the basis of the received current information or the current information and the voltage information, whether to perform a sending step, wherein a trip signal is sent to an execution mechanism in the sending step.

According to a preferred embodiment, when the current direction is forward and exceeds a forward current threshold, the sending step is performed, wherein the current flows from the main grid described to the nano grid described, the current is the forward current, and when the current flows from the nano grid described to the main grid, the current is a reverse current.

According to a preferred embodiment, the sending step comprises: sending the trip signal after waiting for a trip time period, the trip time period being a trip time of an internal protection device inside the nano grid.

According to a preferred embodiment, the determining step comprises: when the current direction is a reverse direction and the current is greater than a reverse current threshold, determining whether to perform the sending step, wherein when the reverse current is continuously greater than the reverse current threshold within a delayed time period, the sending step is performed.

The determining step comprises: when the voltage is reduced, determining that the reverse current is a reverse fault current.

According to a preferred embodiment, the delayed time period is a trip time of the branch protection device.

According to a preferred embodiment, the determining step comprises: when it is determined that the voltage is zero, performing the sending step.

Through the design of the nano grid protection device according to the present invention and the control method of the nano grid protection device, each nano grid is connected to the bus through an intelligent protection device, which can determine the location of the fault, provide timely protection for the nano grid, and avoid the blind zone protection problem of the main power grid protection device.

### Brief Description of the Drawings

The following drawings are intended only to provide a schematic illustration and explanation of the present invention, instead of limiting the scope of the present invention, in which,
Figure 1 shows an embodiment of a large power grid without distributed energy according to the prior art;
Figure 2 shows an embodiment of a large power grid with distributed energy;
Figure 3 shows an embodiment of a trip curve of a protection device;
Figure 4 shows an embodiment of a protection device with a control device according to the present invention;
Figure 5 shows an embodiment of a protection device according to the present invention;
Figure 6 shows an embodiment of the control of a protection device according to the present invention.

### Reference numbers in the drawings:

1. First nano grid
2. Second nano grid and branch
10, 20, 30 and 40 Branches in the internal nano grid
PD1/PD2/PD3a/PD3b Internal protection device inside the nano grid
PD41 First nano grid protection device
PD42 Second nano grid protection device
PD61 First nano grid standby protection device
PD62 Second nano grid standby protection device
PD7 Main grid protection device
PD9 Branch protection device
200 Main grid
300 Bus
S1 Receiving step
S2 Determining step
S3 Sending step

### Specific Embodiments

In order to understand the technical features, purposes and effects of the present invention more clearly, the specific embodiments of the present invention are described with reference to the accompanying drawings.

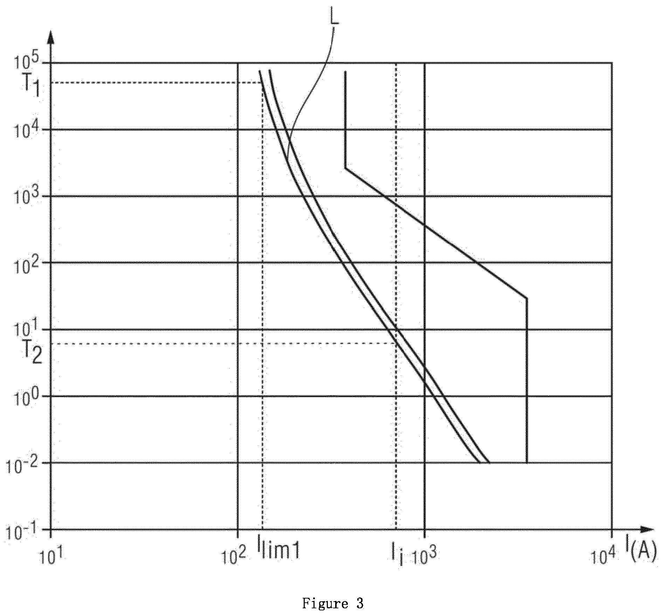

Figure 3 shows the distributed power supply in at least one nano grid. Here, two of the nano grids are illustrated in examples. Among them, the first nano grid 1 and the second nano grid 2 are equipped with distributed power supply. The first nano grid 1 is connected in series with the first nano grid protection device PD41 to form the first nano grid branch (it can also be equipped with a first standby protection device PD61 after it is connected to the first nano grid protection device PD41) and connected to the bus 300; wherein the second nano grid 2 is connected in series with the second nano grid protection device PD42 to form the second nano grid branch (it can also be equipped with a second standby protection device PD62 after it is connected to the second nano grid protection device PD42) and connected to the bus 300. Although not shown, more nano grids can be equipped in this large power grid, which are connected to the bus 300 through a nano grid protection device and a standby protection device respectively. In addition, the main grid 200 is connected to the bus 300 through a main grid protection device PD7.

In this large power grid with distributed power supply, when the current flows from the main grid 200 to each nano grid through the protection devices of each nano grid, the current is said to be in forward direction, or when the current flows from the outside nano grid to the inside nano grid through the protection devices of the nano grid, the current is said to be a forward current. When a current flowing through each nano grid protection device flows from the nano grid to the main power grid, the current is said to be in a reverse direction, or when the current direction flows from the nano grid to the outside nano grid through the nano grid protection device, it is said to be a reverse current.

In the large power grid shown in Figure 2, when F1 fails:
each nano grid protection device PD41, PD42 etc. should be tripped to isolate the fault F1 from each of the nano grids;
each nano grid protection device PD41, PD42 should be tripped before each branch protection device PD11, PD21 etc. in the nano grid;
appear the blind zone protection as described in the prior art should not occur in the main grid protection device PD7.

The above cannot be achieved in the prior art. Specifically, as shown in Figure 2, when F1 fails, the bus current I flowing through the bus is the sum of the current I1 flowing out from the main power grid and the current I2 flowing out from the each nano grid 1 and 2. In other words, I = I1 + I2. That is to say, at this time, each distributed power supply also supplies the power to the fault current, so that the current flowing through the main power grid protection device PD7 becomes smaller. As a result, the fault current detected by the main grid protection device PD7 is smaller than the actual fault current I at F1, which is insufficient for the main grid protection device PD7 to be tripped. In this case, the main grid protection device PD7 has the above-mentioned problem of blind area protection in the prior art.

In addition, as shown in the figure, if F3 on the second nano grid branch fails, that is to say, when the first nano grid 1 finds that another nano grid branch has failed, the protection device PD41 of the first nano grid should not be tripped earlier than the standby protection device PD62 (which, for example, can be a fuse) on the failed nano grid branch, so that it is affected by the adjacent nano grid branch.

In addition, for example, when a fault occurs at F2, and after the fault is repaired, the first nano grid unit of the power grid protection device PD41 can be closed remotely, thus enabling the nano grid to be reconnected to the large grid. For this purpose, a miniature circuit breaker MCB with a remote-controlled (RC) operation mechanism can be used.

To solve one or more of the above issues, an embodiment in the present invention proposes that:
Each nano grid protection device, such as the first grid protection device and/or the second grid protection device, should be able to identify the fault location and execute a series of operations based on the fault location so as to avoid the blind zone protection.

Take the first nano grid 1 as an example. It is connected to the main grid 200 through the bus 300 through the first nano grid protection device. When the first nano grid 1 fails (for example, when a failure occurs at F2), the nano grid protection device PD41 can be tripped according to the forward current trip curve. The so-called trip curve refers to the forward current trip curve as described in Figure 3, in which the curve L shows, for example, the trip curve of the second nano grid standby protection device PD42. For example, when the forward current flowing through the protective device exceeds the current threshold Iₗᵢₘ, the protective device PD42 will trip in T₁ seconds; for example, when the fault current becomes larger, which is Iᵢ, the protective device PD42 will trip in a shorter time Ti according to the curve. Correspondingly, each protection device works according to the set trip curve. The trip curve is usually an empirical curve.

When the exterior of the first nano grid 1 fails, for example, when the fault point is at F1, the first nano grid protection device PD41 should be tripped so that the first nano grid 1 enters the island mode; if the fault point is at F3, the first nano grid protection device PD41 should not be tripped immediately, but a time delay should be implemented as the standby protection of the protection device of the nano grid itself which fails. If the protective device on the nano grid branch which fails has no action or fails, then the first nano grid protective device PD41 is tripped so that the first nano grid 1 enters the island mode.

The above requirements mean that the first nano grid protection device PD41 should have the ability to determine the fault location. Therefore, the control unit 400 of the first nano grid protection device PD41 should be able to have the fault detection capability based on the current, current change, voltage and voltage change etc.

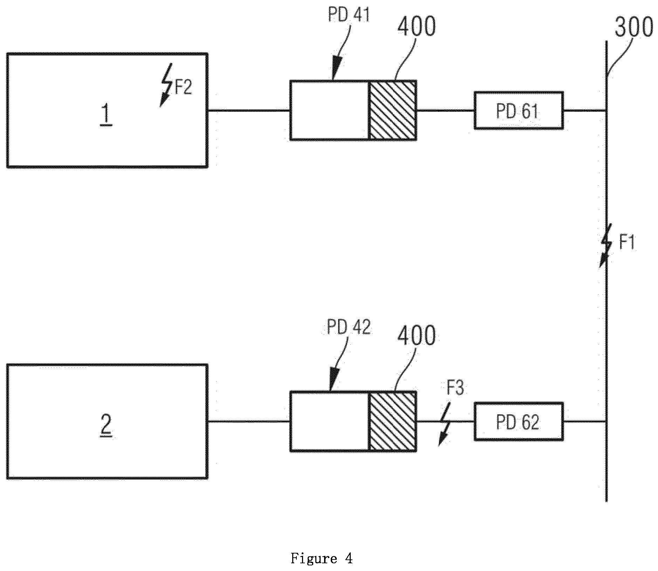

In combination with Figures 2 and 4, the control strategies of the protective devices at key locations, such as the first nano protection device PD41, the main power grid protection device PD7, the standby protection devices PD9 or PD62 of another nano grid can be shown in Table 1 below:

**Table 1: Protective strategies of the protection devices at various locations**

| Situation | PD3 | PD41 | PD7 | PD9/PD62 |
|---|---|---|---|---|
| Failure at F1 | It is not tripped, as there is no fault current. | It is tripped when any of the following conditions are met: | It is tripped when the forward fault current exceeds the fault current threshold of the main power grid protection device. | It is not tripped, as there is no fault current. |
| | | 1. The system voltage is lost due to the trip of PD7; | | |
| | | 2.The reverse fault current exceeds the threshold of the reverse current and the voltage drop appears, and the fault current is not eliminated after waiting for a delayed time period T_{pend}. | | |
| Failure at F2 | It is tripped when the following conditions are met: | It offers the standby protection of the protection device PD3 in the interior nano grid, that is to say: | It offers the standby protection of the first nano grid protection device PD41, that is to say: | It is not tripped, as there is no fault current. |
| | Fault current exceeds the threshold value. | It is tripped when the forward fault current exceeds its forward threshold. | It is tripped when the forward fault current exceeds its forward threshold. | |
| Failure at F3 | It is not tripped, as there is no fault current. | It offers the standby protection of the protection device PD9 and PD62 of another nano grid or another branch, and it is tripped when any of the following conditions are met: | It offers the standby protection of the first nano grid protection device PD41, that is to say: | It is tripped when the following conditions are met: |
| | | The reverse fault current exceeds the threshold of the reverse current and the voltage drop appears, and the fault current is not eliminated after waiting for a delayed time period T_{pend}. | It is tripped when the forward fault current exceeds its forward threshold. | It is tripped when the forward fault current exceeds its forward threshold. |

Among the above control strategies, the control of the first nano grid control device PD41 should be designed to meet the above protection strategies, while the control strategies of other protection devices need not be adjusted relative to the prior art.

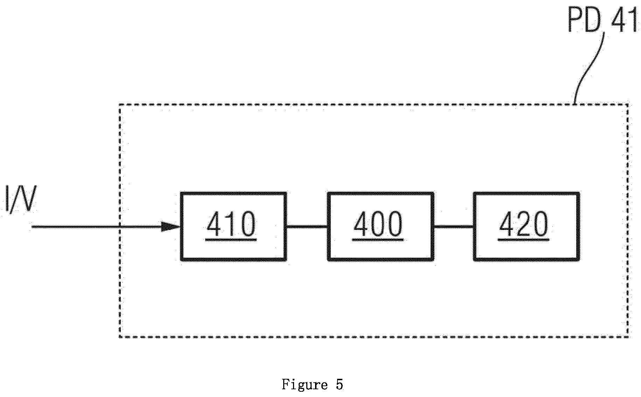

According to the present invention, Figure 5 illustrates a specific embodiment of the first nano grid control device PD41. Generally speaking, this nano grid protection device PD41 can generally comprise a control unit 400, which sends a trip signal to the execution mechanism 420 of the protection device according to its measured forward current based on the trip curve. The nano grid protection device PD41 further comprises a signal unit 410, which can detect the characteristic parameters of the current and/or voltage, and the change of current and/or voltage at the first nano grid protection device PD41. The signal unit 410 sends the characteristic parameters of voltage, current or their changes to the control unit 400 for processing. The control unit 400 may be a software module stored in a storage device 440 or a separate hardware module, or a hardware module with a storage device, or a module combined with software and hardware, among which the storage device 440 can store the forward trip curve and the reverse trip curve of the first nano grid protection device PD41.

Referring to Figure 5 and according to the present invention, the control unit 400 can control the tripping of the first nano grid protection device PD41 based on its determining step and the following conditions:
Scenario 1: When the forward fault current I₊ of the first nano grid protection device PD41 exceeds the forward current threshold I₊ₗᵢₘ, control the first nano grid protection device PD41 for tripping, in which the forward current trip curve of the first nano grid protection device PD41 enables the first nano grid protection device to work as a standby protection device of each protection device in the internal nano grid. That is to say, in the trip curve, the forward current threshold I₊ₗᵢₘ and the corresponding trip time are set so that the trip time of the first nano grid protection device PD41 is longer than that of each protection device in the internal nano grid.
Scenario 2: When the reverse fault current I- of the first nano grid protection device PD41 exceeds the threshold I₋ₗᵢₘ of the reverse fault current, and the reverse fault current still exists in a delayed time period T_{pend}, it can be determined that either another nano grid branch has developed a fault F3, while the corresponding nano grid standby protection device PD62 also fails and does not move, or the bus 300 fails. In either case, the first nano grid protection device PD41 should be tripped. If the fault current no longer exists during the delayed time period T_{pend}, then the corresponding nano grid backup protection device PD62 should perform the tripping action. At this time, the first nano grid protection device PD41 need not perform any further action.

In addition, in order to make further accurate determination, when the first nano grid protection device PD41 finds that the reverse fault current I- has exceeded the fault current threshold I₋ₗᵢₘ in one direction and the voltage drop V_{d}> voltage drop threshold V_{dlim} at the first nano grid protection device PD41, it can be determined to be fault current. Here, the delayed time period T_{pend} can be set based on the trip curve of other nano grid protection devices, such as the protection device PD62, that is to say, the delayed time period T_{pend} of PD41 of the first nano grid protection device is longer than the trip time of the protection device PD62. Scenario 3: When the system voltage is lost, the first nano grid protection device PD41 is controlled for tripping.

In the present invention, although only the above control strategy set on the control unit 400 in the first nano grid protection device PD41 is enumerated, it can be understood that this is only an example. According to the present invention, the control strategy can be set for the control device of each nano grid protection device, or at least for a part of each nano grid protection device.

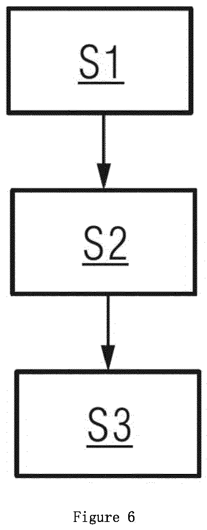

Figure 6 illustrates the control method of a nano grid protection device, which is implemented through the control unit 400 of the nano grid protection device. The method comprises:
a receiving step S1: receiving current information and voltage information passing through the nano grid protection device PD41, PD42, the current information comprising the magnitude and direction of the current, and the voltage information at least comprising the magnitude of a voltage; and
a determining step S2: determining, on the basis of the received current information or the current information and the voltage information, whether to perform a sending step S3, wherein a trip signal is sent to an execution mechanism 420 in the sending step.
When a current direction is a forward direction and the current is greater than a forward current threshold I₊ₗᵢₘ, the sending step S3 is performed.

The sending step S3 described may correspond to Scenario 1, comprising sending the trip signal after waiting for a trip time period, the trip time period being a trip time of an internal protection device inside the nano grid.

In Scenario 2, the determining step S2 comprises: when the current direction is a reverse direction and the current is greater than a reverse current threshold I₋ₗᵢₘ, determining whether to perform the sending step S3, wherein when the reverse current is continuously greater than the reverse current threshold I₋ₗᵢₘ within a delayed time period T_{pend}, the sending step S3 is performed.

The determining step S2 further comprises: when the voltage is reduced, determining that the reverse current is a reverse fault current.

In Scenario 3, the determining step S2 comprises: when it is determined that the voltage is zero, performing the sending step.

It should be understood that although this specification is described in accordance with various embodiments, it is not the case that every embodiment contains only one independent technical solution. This description of the specification is only for clarity. Those skilled in the field should view the specification as a whole, and the technical solutions in the embodiments can also be appropriately combined to form other embodiments understandable by those skilled in the art.

## Claims

1. A nano grid protection device (PD41, PD42) for a nano grid (1, 2) comprising a distributed power supply (DR), wherein the nano grid is connected with a bus (300) through the nano grid protection device (PD41, PD42), and wherein a main grid (200) is connected with the bus (300) through a main grid protection device (PD7), wherein the nano grid protection device (PD41, PD42) comprises:
a signal unit (410), configured to detect and send current information and voltage information, the current information comprising the magnitude and direction of a current passing through the nano grid protection device (PD41, PD42), and the voltage information comprising at least the magnitude of a voltage;
a control unit (400), configured to determine, on the basis of the received current information and voltage information, whether to send a trip signal; and
an execution mechanism (420), configured to execute a trip operation of the nano grid protection device (PD41, PD42) when receiving the trip signal;
wherein when a current flows from the main grid (300) to the nano grid, the signal unit (410) determines that the current is a forward current; and when a current flows from the nano grid to the main grid (200), the signal unit (410) determines that the current is a reverse current;
wherein the control unit (400) is configured
to send a trip signal when the forward current is greater than a forward current threshold (I₊ₗᵢₘ);
to send a trip signal when the reverse current is greater than a reverse current threshold (I₋ₗᵢₘ), and the magnitude of the voltage is reduced, and the reverse current is sustained for a delayed time period (T_{pend}); and
to send a trip signal when the magnitude of the voltage is zero.

2. The nano grid protection device as claimed in claim 1, wherein
the control unit (400) sends the trip signal after waiting for a trip time period, the trip time period being a trip time of an internal protection device inside the nano grid.

3. The nano grid protection device as claimed in claim 1, wherein a branch circuit (2) and the nano grid are connected in parallel to the bus (300) through at least one branch protection device (PD9, PD62), the delayed time period (T_{pend}) being trip time of the branch protection device (PD9, PD62).

4. A large power grid, comprising:
at least one nano grid (1) with a distributed power supply, each of the nano grids being connected to a bus (300) through at least one nano grid protection device;
a branch circuit (2), connected to the bus (300) through at least one branch protection device; and
a main grid, connected to the bus through a main grid protection device (PD7), wherein at least one of the nano grid protection devices is a nano grid protection device as claimed in any one of claims 1 to 3.

5. The large power grid as claimed in claim 4, wherein the branch circuit is a nano grid with a distributed power supply, and the branch protection device is a nano grid protection device as claimed in any one of claims 1 to 3.

6. A method for controlling a nano grid protection device (PD41, PD42) for a nano grid (1, 2) comprising a distributed power supply (DR), wherein the nano grid is connected with a bus (300) through the nano grid protection device (PD41, PD42), a branch circuit (2) and the nano grid are connected in parallel to the bus (300) through at least one branch protection device (PD9, PD62), and wherein a main grid (200) is connected with the bus (300) through a main grid protection device, wherein the method comprises:
a receiving step (S1): receiving current information and voltage information, the current information comprising the magnitude and direction of a current passing through the nano grid protection device (PD41, PD42), and the voltage information at least comprising the magnitude of a voltage a determining step (S2): determining, on the basis of the received current information and the voltage information, whether to perform a sending step (S3), wherein a trip signal is sent to an execution mechanism (420) in the sending step (S3),
wherein the determining step (S2) comprises:
determining that a current flowing from the main grid (300) to the nano grid is a forward current; and a current flowing from the nano grid to the main grid (300) is a reverse current;
determining whether the forward current exceeds a forward current threshold (I₊ₗᵢₘ);
determining whether the reverse current exceeds a reverse current threshold (I₋ₗᵢₘ), whether the magnitude of the voltage is reduced, and whether the reverse current is sustained for a delayed time period (T_{pend});
determining whether the magnitude of the voltage is zero;
wherein the sending step (S3) is performed when at least one of the following conditions is fulfilled:
- the forward current exceeds the forward current threshold (I₊ₗᵢₘ);
- the reverse current is greater than the reverse current threshold (L₋ₗᵢₘ), the magnitude of the voltage is reduced, and the reverse current is sustained for the delayed time period (T_{pend}) ; and
- the magnitude of the voltage is zero.

7. The method for controlling the nano grid protection device as claimed in claim 6, wherein the sending step (S3) comprises: sending the trip signal after waiting for a trip time period, the trip time period being a trip time of an internal protection device inside the nano grid.

8. The nano grid protection method as claimed in claim 6, wherein the delayed time period (T_{pend}) is a trip time of the branch protection device (PD9, PD62).

## Patentansprüche

1. Nanonetzschutzvorrichtung (PD41, PD42) für ein Nanonetz (1, 2), das eine verteilte Stromversorgung (DR) umfasst, wobei das Nanonetz durch die Nanonetzschutzvorrichtung (PD41, PD42) mit einem Bus (300) verbunden ist und wobei ein Hauptnetz (200) durch eine Hauptnetzschutzvorrichtung (PD7) mit dem Bus (300) verbunden ist, wobei die Nanonetzschutzvorrichtung (PD41, PD42) umfasst:
eine Signaleinheit (410), die konfiguriert ist, um Strominformationen und Spannungsinformationen zu erkennen und zu senden, wobei die Strominformationen die Größe und die Richtung eines Stroms umfassen, der durch die Nanonetzschutzvorrichtung (PD41, PD42) fließt, und wobei die Spannungsinformationen mindestens die Größe einer Spannung umfassen;
eine Steuereinheit (400), die konfiguriert ist, um basierend auf den empfangenen Strominformationen und Spannungsinformationen zu ermitteln, ob ein Auslösesignal zu senden ist; und
einen Ausführungsmechanismus (420), der konfiguriert ist, um eine Auslöseoperation der Nanonetzschutzvorrichtung (PD41, PD42) auszuführen, wenn das Auslösesignal empfangen wird;
wobei, wenn ein Strom von dem Hauptnetz (300) zu dem Nanonetz fließt, die Signaleinheit (410) ermittelt, dass der Strom ein Vorwärtsstrom ist; und wenn ein Strom von dem Nanonetz zu dem Hauptnetz (200) fließt, die Signaleinheit (410) ermittelt, dass der Strom ein Rückstrom ist;
wobei die Steuereinheit (400) ferner konfiguriert ist zum Senden eines Auslösesignals, wenn der Vorwärtsstrom größer als ein Vorwärtsstromschwellenwert ist (I₊ₗᵢₘ);
zum Senden eines Auslösesignals, wenn der Rückstrom größer als ein Rückstromschwellenwert (I₋ₗᵢₘ) ist und die Größe der Spannung reduziert wird und der Rückstrom für eine verzögerte Zeitdauer (T_{pend}) aufrechterhalten wird; und
zum Senden eines Auslösesignals, wenn die Größe der Spannung Null ist.

2. Nanonetzschutzvorrichtung nach Anspruch 1, wobei
die Steuereinheit (400) das Auslösesignal nach einem Warten für eine Auslösedauer sendet, wobei die Auslösedauer eine Auslösezeit einer internen Schutzeinrichtung innerhalb des Nanonetzes ist.

3. Nanonetzschutzvorrichtung nach Anspruch 1, wobei eine Zweigschaltung (2) und das Nanonetz über mindestens eine Zweigschutzvorrichtung (PD9, PD62) parallel mit dem Bus (300) verbunden sind, wobei die verzögerte Zeitdauer (T_{pend}) eine Auslösezeit der Zweigschutzvorrichtung (PD9, PD62) ist.

4. Grossstromnetz, umfassend:
mindestens ein Nanonetz (1) mit einer verteilten Stromversorgung, wobei jedes der Nanonetze durch mindestens eine Nanonetzschutzvorrichtung mit einem Bus (300) verbunden ist;
eine Zweigschaltung (2), die durch mindestens eine Zweigschutzeinrichtung mit dem Bus (300) verbunden ist; und
ein Hauptnetz, das durch eine Hauptnetzschutzvorrichtung (PD7) mit dem Bus verbunden ist, wobei mindestens eine der Nanonetzschutzvorrichtungen eine Nanonetzschutzvorrichtung nach einem der Ansprüche 1 bis 3 ist.

5. Grossstromnetz nach Anspruch 4, wobei die Zweigschaltung ein Nanonetz mit einer verteilten Stromversorgung ist und die Zweigschutzvorrichtung eine Nanonetzschutzvorrichtung nach einem der Ansprüche 1 bis 3 ist.

6. Verfahren zum Steuern einer Nanonetzschutzvorrichtung (PD41, PD42) für ein Nanonetz (1, 2), das eine verteilte Stromversorgung (DR) umfasst, wobei das Nanonetz durch die Nanonetzschutzvorrichtung (PD41, PD42) mit einem Bus (300) verbunden ist, wobei eine Zweigschaltung (2) und das Nanonetz durch mindestens eine Zweigschutzvorrichtung (PD9, PD62) parallel mit dem Bus (300) verbunden sind, und wobei ein Hauptnetz (200) durch eine Hauptnetzschutzvorrichtung mit dem Bus (300) verbunden ist, wobei das Verfahren umfasst:
einen Empfangsschritt (S1): Empfangen von Strominformationen und Spannungsinformationen, wobei die Strominformationen die Größe und die Richtung eines Stroms umfassen, der durch die Nanonetzschutzvorrichtung (PD41, PD42) fließt, und wobei die Spannungsinformationen mindestens die Größe einer Spannung umfassen; einen Ermittlungsschritt (S2): Ermitteln, basierend auf den empfangenen Strominformationen und den Spannungsinformationen, ob ein Sendeschritt (S3) durchzuführen ist, wobei in dem Sendeschritt (S3) ein Auslösesignal an einen Ausführungsmechanismus (420) gesendet wird,
wobei der Ermittlungsschritt (S2) umfasst:
Ermitteln, dass ein Strom, der von dem Hauptnetz (300) zu dem Nanonetz fließt, ein Vorwärtsstrom ist; und ein Strom, der von dem Nanonetz zu dem Hauptnetz (300) fließt, ein Rückstrom ist;
Ermitteln, ob der Vorwärtsstrom einen Vorwärtsstromschwellenwert überschreitet (I₊ₗᵢₘ);
Ermitteln, ob der Rückstrom einen Rückstromschwellenwert (I₋ₗᵢₘ) überschreitet, ob die Größe der Spannung reduziert wird und ob der Rückstrom für eine verzögerte Zeitdauer aufrechterhalten wird (T_{pend});
Ermitteln, ob die Größe der Spannung Null ist;
wobei der Sendeschritt (S3) durchgeführt wird, wenn mindestens eine der folgenden Bedingungen erfüllt ist:
- der Vorwärtsstrom überschreitet den Vorwärtsstromschwellenwert (I₊ₗᵢₘ);
- der Rückstrom ist größer als der Rückstromschwellenwert (I-ₗᵢₘ), die Größe der Spannung wird reduziert und der Rückstrom wird für die verzögerte Zeitdauer (T_{pend}) aufrechterhalten; und
- die Größe der Spannung ist Null.

7. Verfahren zum Steuern der Nanonetzschutzvorrichtung nach Anspruch 6, wobei der Sendeschritt (S3) umfasst: Senden des Auslösesignals nach dem Warten für eine Auslösedauer, wobei die Auslösedauer eine Auslösezeit einer internen Schutzvorrichtung innerhalb des Nanonetzes ist.

8. Nanonetzschutzverfahren nach Anspruch 6, wobei die verzögerte Zeitdauer (T_{pend}) eine Auslösezeit der Zweigschutzvorrichtung (PD9, PD62) ist.

## Revendications

1. Dispositif de protection de nanoréseau (PD41, PD42) destiné à un nanoréseau (1, 2) comprenant une alimentation électrique distribuée (DR), où le nanoréseau est connecté à un bus (300) par l'intermédiaire du dispositif de protection de nanoréseau (PD41, PD42), et où un réseau électrique principal (200) est connecté au bus (300) par l'intermédiaire d'un dispositif de protection de réseau électrique principal (PD7), où le dispositif de protection de nanoréseau (PD41, PD42) comprend :
une unité de signal (410), configurée pour détecter et envoyer des informations de courant et des informations de tension, les informations de courant comprenant l'intensité et le sens d'un courant traversant le dispositif de protection de nanoréseau (PD41, PD42), et les informations de tension comprenant au moins l'intensité d'une tension ;
une unité de commande (400), configurée pour déterminer, sur la base des informations de courant et de tension reçues, s'il faut envoyer un signal de déclenchement ; et
un mécanisme d'exécution (420), configuré pour exécuter un déclenchement du dispositif de protection de nanoréseau (PD41, PD42) à la réception du signal de déclenchement ;
où, lorsqu'un courant circule du réseau électrique principal (300) vers le nanoréseau, l'unité de signal (410) détermine que le courant est un courant direct ; et lorsqu'un courant circule du nanoréseau vers le réseau électrique principal (200), l'unité de signal (410) détermine que le courant est un courant inverse ;
où l'unité de commande (400) est configurée pour :
envoyer un signal de déclenchement lorsque le courant direct est supérieur à un seuil de courant direct (I₊ₗᵢₘ) ;
envoyer un signal de déclenchement lorsque le courant inverse est supérieur à un seuil de courant inverse (I₋ₗᵢₘ), et l'intensité de la tension est réduite, et le courant inverse est maintenu pendant une durée de temporisation (T_{pend}) ; et
envoyer un signal de déclenchement lorsque l'intensité de la tension est nulle.

2. Dispositif de protection de nanoréseau selon la revendication 1, dans lequel
l'unité de commande (400) envoie le signal de déclenchement après attente d'un délai de déclenchement, le délai de déclenchement étant le temps de déclenchement d'un dispositif de protection interne à l'intérieur du nanoréseau.

3. Dispositif de protection de nanoréseau selon la revendication 1, dans lequel un circuit de dérivation (2) et le nanoréseau sont connectés en parallèle au bus (300) par l'intermédiaire d'au moins un dispositif de protection de dérivation (PD9, PD62), la durée de temporisation (T_{pend}) étant le temps de déclenchement du dispositif de protection de dérivation (PD9, PD62).

4. Réseau électrique de grande taille, comprenant :
au moins un nanoréseau (1) muni d'une alimentation électrique distribuée, chacun des nanoréseaux étant connecté à un bus (300) à travers au moins un dispositif de protection de nanoréseau ;
un circuit de dérivation (2), connecté au bus (300) par l'intermédiaire d'au moins un dispositif de protection de dérivation ; et
un réseau électrique principal, connecté au bus par l'intermédiaire d'un dispositif de protection de réseau électrique principal (PD7), où au moins un des dispositifs de protection de nanoréseau est un dispositif de protection de nanoréseau selon l'une quelconque des revendications 1 à 3.

5. Réseau électrique de grande taille selon la revendication 4, dans lequel le circuit de dérivation est un nanoréseau avec une alimentation électrique distribuée, et le dispositif de protection de dérivation est un dispositif de protection de nanoréseau selon l'une quelconque des revendications 1 à 3.

6. Procédé de contrôle d'un dispositif de protection de nanoréseau (PD41, PD42) pour un nanoréseau (1, 2) comprenant une alimentation électrique distribuée (DR), où le nanoréseau est connecté à un bus (300) à travers le dispositif de protection de nanoréseau (PD41, PD42), un circuit de dérivation (2) et le nanoréseau sont connectés en parallèle au bus (300) à travers au moins un dispositif de protection de dérivation (PD9, PD62), et où un réseau électrique principal (200) est connecté avec le bus (300) à travers un dispositif de protection de réseau électrique principal, où le procédé comprend :
une étape de réception (S1) comprenant de recevoir des informations de courant et des informations de tension, les informations de courant comprenant l'intensité et le sens d'un courant traversant le dispositif de protection de nanoréseau (PD41, PD42), et les informations de tension comprenant au moins l'intensité d'une tension ; une étape de détermination (S2) comprenant de déterminer, sur la base des informations de courant reçues et des informations de tension, s'il faut exécuter une étape d'émission (S3), dans laquelle un signal de déclenchement est envoyé à un mécanisme d'exécution (420) au cours de l'étape d'émission (S3),
où l'étape de détermination (S2) comprend les étapes suivantes :
déterminer qu'un courant s'écoulant du réseau électrique principal (300) vers la nanoréseau est un courant direct ; et
qu'un courant s'écoulant du nanoréseau vers le réseau électrique principal (300) est un courant inverse ;
déterminer si le courant direct dépasse un seuil de courant direct (I₊ₗᵢₘ) ;
déterminer si le courant inverse dépasse un seuil de courant inverse (I₋ₗᵢₘ), si l'intensité de la tension est diminuée, et si le courant inverse est maintenu pendant une durée de temporisation (T_{pend}) ;
déterminer si l'intensité de la tension est nulle ;
où l'étape d'envoi (S3) est exécutée lorsqu'au moins l'une des conditions suivantes est satisfaire :
- le courant direct dépasse le seuil de courant direct (I₊ₗᵢₘ) ;
- le courant inverse est supérieur au seuil de courant inverse (I₋ₗᵢₘ), l'intensité de la tension est diminuée, et le courant inverse est maintenu pendant la durée de temporisation (T_{pend}) ; et
- l'intensité de la tension est nulle.

7. Procédé de commande du dispositif de protection de nanoréseau selon la revendication 6, dans lequel l'étape d'émission (S3) comprend d'envoyer le signal de déclenchement après l'attente d'un délai de déclenchement, le délai de déclenchement étant le temps de déclenchement d'un dispositif de protection interne à l'intérieur du nanoréseau.

8. Procédé de protection de nanoréseau selon la revendication 6, dans lequel la durée de temporisation (T_{pend}) est le temps de déclenchement du dispositif de protection de dérivation (PD9, PD62).
